# FASCICULE DE BREVET EUROPEEN

(11) **EP 1 689 595 B1**
(45) Date de publication et mention de la délivrance du brevet: **05.05.2010**
(21) Numéro de dépôt: 04805638.6
(22) Date de dépôt: 03.12.2004
(51) Int. Cl.: B42D 15/10

(54) **PROCEDES DE FABRICATION D UN DOCUMENT DE SECURITE ET DOCUMENT CORRESPONDANT**
VERFAHREN ZUR HERSTELLUNG EINES SICHERHEITSDOKUMENTS UND EIN ENTSPRECHENDES DOKUMENT
METHOD FOR PRODUCING A SECURITY DOCUMENT AND A CORRESPONDING DOCUMENT

(30) Priorité: 04.12.2003 FR 0314214
(43) Date de publication de la demande: 16.08.2006
(73) Titulaire: Francois Charles Oberthur Fiduciaire, 75017 Paris (FR)
(72) Inventeur: DEMAIMAY, Florian, F-35000 Rennes (FR); BORDE, Xavier, F-35410 Osse (FR)
(74) Mandataire: Branger, Jean-Yves
(86) Numéro de dépôt international: PCT/FR2004/003119
(87) Numéro de publication internationale: WO 2005/056305

(56) Documents cités:
- WO-A-03/032241
- US-A- 4 222 516
- US-A- 4 455 039
- US-A1- 2001 007 335
- US-A1- 2002 018 430
- US-A1- 2003 132 302

## Description

La présente invention se rapporte à des procédés de fabrication d'un document de sécurité, tel qu'une carte d'identité, un permis de conduire, ou un passeport, qui comprend des caractéristiques imprimées invariables, ainsi que des caractéristiques imprimées variables, liées notamment à l'identité de son porteur.

Elle concerne également un tel document de sécurité.

Au sens de la présente invention, on entend par document de sécurité ou document d'identification, un document tel qu'une carte d'identité, un permis de conduire, un passeport, qui comporte des caractéristiques imprimées invariables, c'est-à-dire qui ne changent pas d'un document à l'autre, telles que les mentions "nom", "prénom", "sexe", "adresse", "nationalité", "taille", etc, ainsi que des caractéristiques imprimées variables, c'est-à-dire spécifiques à son porteur et en particulier à son propriétaire, et différentes d'un porteur à l'autre. Ces caractéristiques peuvent être constituées par la mention du patronyme, du prénom, de la taille, etc, dudit porteur.

Les documents de sécurité, tels que passeports, cartes d'identité, cartes grises, permis de conduire, etc, sont en permanence soumis à des tentatives de falsification et de contrefaçon.

De ce fait, les imprimeurs dits de haute sécurité doivent en permanence mettre en oeuvre de nouvelles solutions de protection de ces documents, et en particulier développer de nouveaux moyens de sécurité et de nouvelles technologies.

Dans ce dernier domaine, il est désormais admis d'incorporer dans les documents de sécurité des transpondeurs (ou puces) sans contact. Ces derniers permettent de stocker de manière sécurisée et éventuellement cryptée les informations concernant le titulaire du document ou la nature même de ce document. Par la suite, la relecture de ces informations permet d'authentifier le document et/ou son porteur.

La mise en oeuvre de cette technologie est particulièrement avancée dans le domaine des passeports et fait partie des dernières recommandations de l'ICAO (International Civil Aviation Organization), autorité compétente dans ce domaine.

L'utilisation de tels transpondeurs se heurte cependant à une difficulté majeure qui est celle de leur incorporation dans un document sans en modifier l'aspect et tout en maintenant une durabilité suffisante au vu des contraintes auxquelles ce document sera soumis.

En effet, les supports fiduciaires traditionnellement utilisés sont de nature papier, avec une épaisseur de l'ordre de 100 microns. Le choix d'un support papier est lié à la méthode de production contrôlée, restreinte, et sécuritaire de ce type de support, ainsi qu'aux dispositifs de sécurité qui y sont intégrés (filigranes, fibres, fil de sécurité...).

Les transpondeurs sans contact couramment utilisés présentent une épaisseur de l'ordre de 50 à 200 microns, de sorte que cela génère une surépaisseur sur le dessus de la feuille sur laquelle ils sont fixés.

Des solutions doivent donc être mises en oeuvre pour rendre la surépaisseur du transpondeur aussi imperceptible que possible.

Ainsi, la Société ARJO WIGGINS, dans le document WO-A-02/089052, propose de réaliser un support multicouches dans l'épaisseur de laquelle est logée la puce sans générer de surépaisseur. L'une des couches du support présente un trou ou une cavité dans laquelle la puce est accueillie. La cavité est réalisée par exemple par un filigrane en creux réalisé sur l'une ou les deux feuilles qui sont par la suite contrecollées ensemble. Dans un autre mode de réalisation, il est également évoqué le dépôt d'une résine dont l'épaisseur excède celle de la puce.

La mise en oeuvre de ces méthodes nécessite des étapes de production supplémentaires non prévues dans le procédé traditionnel de fabrication de documents de sécurité, comme dans le cas d'un passeport par exemple.

D'autre part, l'épaisseur résultante du support ainsi constitué est supérieure à celle des supports traditionnels. Cela se répercute de façon néfaste sur les propriétés de souplesse et de flexion que l'on souhaite donner au document de sécurité.

Le document FR-A-2 337 381 a trait à une carte pour système de traitement de signaux et à son procédé de fabrication.

En référence à certains modes de réalisation, la carte est formée de deux feuilles, la feuille supérieure ayant été embossée. Dans la cavité ainsi générée est placée la puce de la carte et sa plaquette de support.

Le document WO-A-03/032241 se rapporte à un module électronique avec bossage de protection.

Le composant électronique est disposé sur un substrat. On recouvre l'ensemble d'une couche de protection.

La couche de protection prend la forme du composant électronique par application d'une plaque de laminage pourvue d'une dépression.

Dans le document US-A-4,222,516 est décrit un procédé/document de sécurité selon les termes du préambule de la revendication 1/revendication 10.

Dans les documents US-A-4,455,039 et US-A-2002/018,430 sont décrits des documents de sécurité comportant des impressions réalisées en taille-douce.

Dans les premiers documents cités, le bossage n'a qu'une fonction, à savoir servir de logement pour la puce.

Ces techniques occasionnent toutes les deux la présence d'un bossage qui renseigne immédiatement l'utilisateur sur la présence d'un « corps étranger », en l'occurrence une puce.

La présente invention, voir revendication 1, vise à proposer un procédé de fabrication d'un tel document de sécurité qui permet une incorporation en son sein d'une puce (ou transpondeur), sans que la présence de cette dernière ne soit perceptible visuellement et tactilement, et tout en respectant les épaisseurs de documents traditionnellement employées.

Elle vise également à fournir un procédé simple de mise en oeuvre et employant des opérations de type connu.

Ainsi, ce procédé de fabrication d'un document de sécurité, tel qu'une carte d'identité, un permis de conduire, ou un passeport, qui comprend des caractéristiques imprimées invariables, ainsi que des caractéristiques imprimée variables, liées notamment à l'identité de son porteur, et qui est constitué d'au moins une première feuille et une deuxième feuille solidaire de la première, une puce sans contact et son antenne associée étant emprisonnées entre ces deux feuilles, selon lequel, préalablement à la solidarisation des deux feuilles, on soumet la face verso d'au moins l'une d'entre elles à une opération générant sur cette face, au moins une cavité, tout en créant simultanément sur la face recto opposée un relief, l'une desdites cavités présentant des dimensions suffisantes pour servir de logement à la totalité de ladite puce, lors de la solidarisation desdites feuilles, se caractérise par le fait que ladite opération consiste en une opération en taille-douce avec ou sans encrage, de sorte que ledit relief est revêtu ou non d'encre.

Quand l'opération consiste en une impression en taille-douce sans encrage de ladite feuille, cette technique est qualifiée de "timbre sec".

On se sert donc d'une cavité générée par une impression, en l'occurrence en taille-douce, dont la fonction première est de générer un relief sur la face opposée pour des raisons décoratives et/ou de sécurité, pour y loger une puce. Une seconde fonction est ainsi conférée à l'impression.

Ceci va donc à l'encontre des enseignements de l'état de la technique puisque, comme de l'art antérieur constitué par les documents FR-A-2 337 381 et WO-A-03/032241, on génère un relief à la surface du document, mais que, contrairement à celui-ci, on rend « non décelable » la présence d'une puce.

Selon d'autres caractéristiques avantageuses et non limitatives de ce procédé :
- on soumet la face verso des deux feuilles à une opération générant sur cette face, au moins une cavité, tout en créant simultanément sur la face recto opposée un relief, et ladite opération est de même nature ou de nature différente pour chaque feuille ;
- on soumet la face verso d'une seule des deux feuilles à une opération générant sur cette face, au moins une cavité, tout en créant simultanément sur la face recto opposée un relief, ladite puce et son antenne associée étant portées par la face verso de la deuxième feuille ;
- on soumet la face verso d'une seule des deux feuilles à une opération générant sur cette face, au moins une cavité, tout en créant simultanément sur la face recto opposée un relief, ladite puce et son antenne associée étant portées par la face verso de cette feuille ;
- ladite antenne est préalablement imprimée sur la face verso d'une desdites feuilles ;
- on génère une seule cavité, tout en créant simultanément sur la face recto opposée de la feuille, un seul relief, ces cavité et relief présentant, dans des plans parallèles au plan général de la feuille, une surface beaucoup plus importante que celle de la puce ;
- on génère plusieurs cavités, tout en créant simultanément sur la face recto opposée de la feuille, autant de reliefs, ces reliefs présentant une forme identique ou différente, préférentiellement de surface différente ;
- on solidarise lesdites feuilles par contre collage ;
- lesdites feuilles forment les deux volets d'une feuille de plus grande dimension, repliée sur elle -même.

L'invention concerne également un document de sécurité, voir revendication 10, qui comprend des caractéristiques imprimées invariables, ainsi que des caractéristiques imprimées variables, liées notamment à l'identité de son porteur, et qui est constitué d'au moins une première feuille et une deuxième feuille solidaire de la première, une puce sans contact et son antenne associée étant emprisonnées entre ces deux feuilles, la face verso d'au moins l'une d'entre elles comportant au moins une cavité et, sur la face recto opposée et en regard de ladite cavité, un relief correspondant, l'une desdites cavités présentant des dimensions suffisantes pour servir de logement à la totalité ladite puce entre lesdites feuilles solidarisées.

Selon l'invention, ce document consiste en un passeport ou en une carte d'identité et la cavité est obtenue par une impression en taille-douce.

Dans l'ensemble de la présente invention, y compris les revendications, on entend par face recto d'une feuille, la face qui, après solidarisation des deux feuilles, demeure visible de l'extérieur.

Lors de la fabrication des documents de haute sécurité selon la technique traditionnelle, l'une des étapes mise en oeuvre consiste en l'impression taille-douce (aussi connue sous l'appellation "intaglio"). Ce type d'impression est particulièrement adapté à la sécurisation des documents, de par la complexité de sa réalisation et de sa mise en oeuvre par un nombre limité d'entreprises.

De plus, cette technique d'impression est seule à pouvoir générer des reliefs importants. En effet, les dépôts d'encre obtenus par ce procédé d'impression taille-douce sont de l'ordre de 20 - 100 microns. Des sécurités spécifiques telles que des zones tactiles, des images latentes ou des timbres secs ont ainsi été développés à partir de ce type d'impression, pour tirer le meilleur parti de ces propriétés particulières.

Selon l'invention, on fait usage de l'impression taille-douce pour réaliser le masquage d'un transpondeur dans un document de sécurité.

Pour ce faire, le transpondeur est déposé sur une première feuille du document qui est elle-même contrecollée sur une deuxième feuille qui présente en regard du transpondeur, un motif réalisé en taille-douce. La technique même d'impression taille-douce génère sur le côté verso de la feuille une petite cavité dans laquelle va être logée la partie en surépaisseur de la puce. Au toucher, l'utilisateur ressentira sur la face recto la sensation tactile de l'impression en taille-douce, sans deviner la présence de la puce.

La présente invention va donc à l'opposé de la technique décrite dans le document WO-A-02/089052 cité plus haut, puisque l'on recherche à générer sur la face recto d'une des feuilles du document, au moins un relief, la cavité située en regard sur la face verso servant à y loger la puce.

La réalisation de reliefs sur le recto d'au moins l'une des feuilles détourne l'attention de l'utilisation. Celui-ci pense ainsi avoir affaire à des reliefs purement décoratifs ou de sécurité, alors que ceux-ci servent aussi, grâce à la présence d'une cavité correspondante, à masquer la puce.

D'autres caractéristiques et avantages de la présente invention apparaîtront à la lecture de la description détaillée qui va suivre de certaines modes de réalisation préférentiels.

Cette description sera faite en référence aux dessins annexés, dans lesquels :
- la figure 1 est une vue simplifiée et partielle, selon un plan de coupe vertical, d'un document de sécurité obtenu conformément à un procédé selon l'invention, avant assemblage des deux feuilles qui le constituent ;
- la figure 2 est une vue analogue à la figure 1, d'une variante de réalisation dudit document ;
- les figures 3 à 6 sont des vues de dessus simplifiées des deux feuilles qui constituent le document de sécurité obtenu selon l'invention, avant solidarisation, selon des modes de réalisation différents ;
- la figure 7 est une vue en perspective d'une feuille constituée de deux volets aptes à être rabattus l'un sur l'autre pour former un document conforme à l'invention.

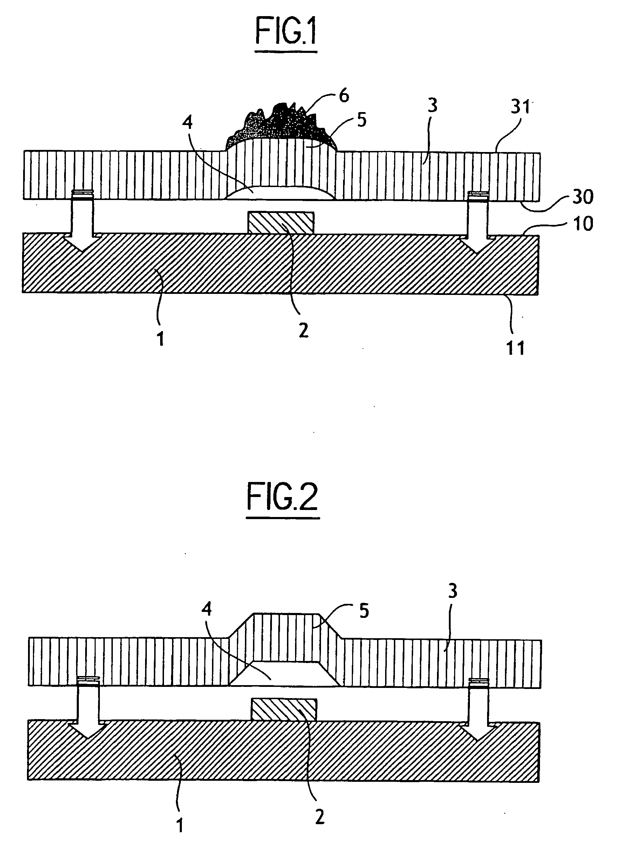

A la figure 1 est représenté partiellement et de manière simplifiée, un document obtenu conformément à un procédé selon l'invention, avant assemblage des deux feuilles qui le constituent.

Sur la face verso 10 d'un support 1 consistant par exemple en une feuille de papier de sécurité, est fixé une puce ou transpondeur 2. Celle-ci est par exemple reliée à une antenne non visible sur la figure.

Dans certains cas, on peut utiliser une puce qui porte elle-même son antenne associée.

Conformément à l'invention, et préalablement à la solidarisation de la feuille 1 avec une seconde feuille 3 du même type, on soumet la face verso 30 de cette feuille à une opération générant sur cette face une cavité 4 tout en créant simultanément sur la face recto opposée 31 un relief 5, cette cavité 4 présentant des dimensions suffisantes pour servir de logement à la totalité de la puce 2, lors de la solidarisation des feuilles.

Dans le cas présenté ici, ladite opération consiste en une impression en taille-douce.

Pour mémoire, cette technique d'impression est spécifiquement dédiée aux imprimeurs de documents de haute sécurité. Elle se caractérise par l'utilisation de plaques gravées en creux correspondant au(x) motif(s) à imprimer.

La plaque est enduite d'une encre spécifique et l'excès d'encre est essuyé pour n'en laisser que dans les creux de la gravure.

Ensuite, l'impression est réalisée par "démoulage" de cette encre sur le papier, en mettant en oeuvre des contraintes de température et de pression importantes exercées au niveau du groupe d'impression.

Sous ces contraintes, le papier est déformé et forcé à venir au contact de l'encre située dans les cavités. La pression est telle que cette déformation de la feuille reste marquée au verso, ce qui crée des cavités du type de la cavité 4 dans le papier.

Ainsi, à l'aide du procédé en taille-douce, il est possible de réaliser conjointement une cavité 4 sur la face verso de la feuille et un relief correspondant 5 sur la face recto 31, lequel est surmonté d'une impression 6 constituée d'encre.

La cavité 4 sert de logement à la puce 2 après solidarisation des feuilles 1 et 2, par exemple par contre-collage de leurs faces verso 20 et 30.

On a donc généré, par une seule opération, à la fois la cavité 4, le relief 5 et l'impression 6 et on se sert de ladite cavité pour masquer la puce.

Visuellement et de manière tactile, l'utilisateur du document détecte le relief 5 et l'impression 6, en pensant avoir affaire à une impression en taille-douce, sans soupçonner la présence de la puce.

Dans le cas présenté ici, on a réalisé une seule cavité 4 associée à un seul relief 5 et une seule impression 6.

Bien entendu, il peut être envisagé de confectionner une multitude de cavités et de relief/impressions associées, l'une de ces cavités seulement accueillant ladite puce.

Ce procédé selon l'invention peut notamment s'appliquer à la réalisation d'un passeport.

Le procédé traditionnel de façonnage d'un passeport comporte habituellement une étape de contre-collage de la couverture et d'une page de garde. Lorsqu'un transpondeur est incorporé dans un passeport, il peut être fixé directement au verso de la couverture. Dans ce cas, c'est la page de garde qui est contre-collée sur cette couverture qui fait l'objet d'un passage d'impression en taille-douce. Lors de cette impression, on peut réaliser des graphismes avec des reliefs importants. L'un de ces reliefs sera disposé pour se situer en regard du transpondeur lors de l'opération de contre-collage.

Il est communément admis de positionner le transpondeur au plus proche de la couture du passeport, ceci afin de limiter les sollicitations mécaniques sur ce composant électronique.

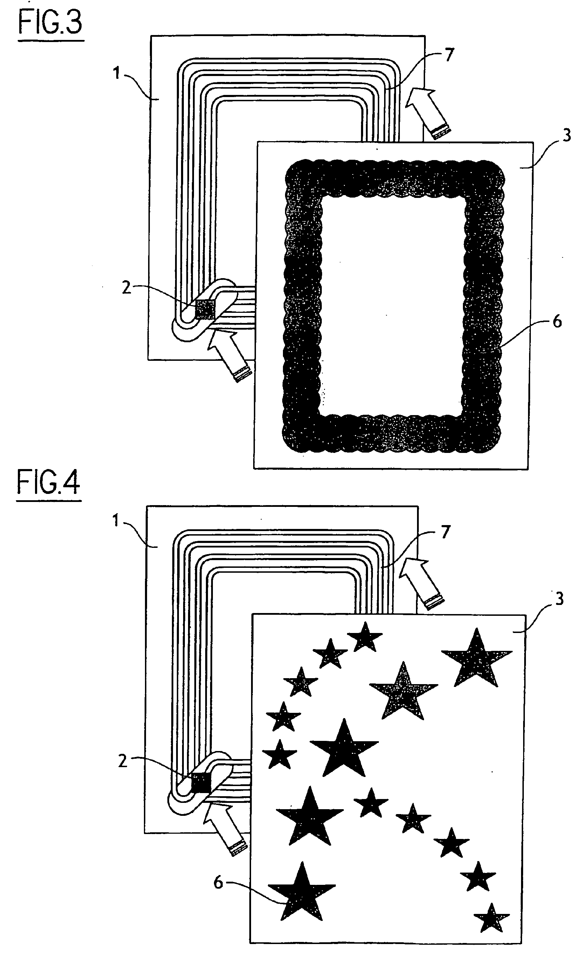

En outre, l'impression taille-douce de la page de garde comprend très souvent des bandeaux qui longent les bords de ladite page. Il est alors aisé de prévoir dans le bandeau le plus proche de la zone de couture, une région avec une impression taille-douce très prononcée et de dimension suffisante pour recouvrir le transpondeur. Cela a été illustré à la figure 3.

L'impression en taille-douce sous la forme de bandeaux 6 dont l'ensemble forme un "cadre" est exécutée sur le recto de la feuille 3. Le transpondeur 2, ainsi que son antenne 7 sont déposés sur le verso de la feuille 1. Le transpondeur est alors masqué lors de l'étape d'assemblage des feuilles 1 et 3, par exemple par contre-collage.

Dans un autre type de réalisation, on peut réaliser l'impression taille-douce sous la forme d'une zone isolée, par exemple d'une guilloche, d'un logo, ou tout autre graphisme adapté, dont le positionnement et la dimension permettent de recouvrir le transpondeur.

De plus, pour rendre la localisation du transpondeur difficile, on peut reproduire plusieurs fois le même relief et l'impression associée. Ceci a été représenté à la figure 4 dans laquelle plusieurs impressions 6 en forme d'étoile ont été réalisées. Ainsi, le titulaire du passeport ne pourra distinguer entre les différentes zones tactiles que l'une d'entre elles masque un transpondeur.

Dans un second procédé selon l'invention représenté schématiquement à la figure 2, on fait usage de la technique dite du timbre sec. Cette technique d'impression en taille-douce consiste à ne pas encrer la plaque d'impression et à réaliser un relief ou timbre sec sur le support. Les déformations créées dans le support, qui est éventuellement pré-imprimé, permettent de générer des effets tactiles ou des effets d'images latentes (comme par exemple celle mise en oeuvre par le présent demandeur et connue sous la marque déposée "FCO-Seal").

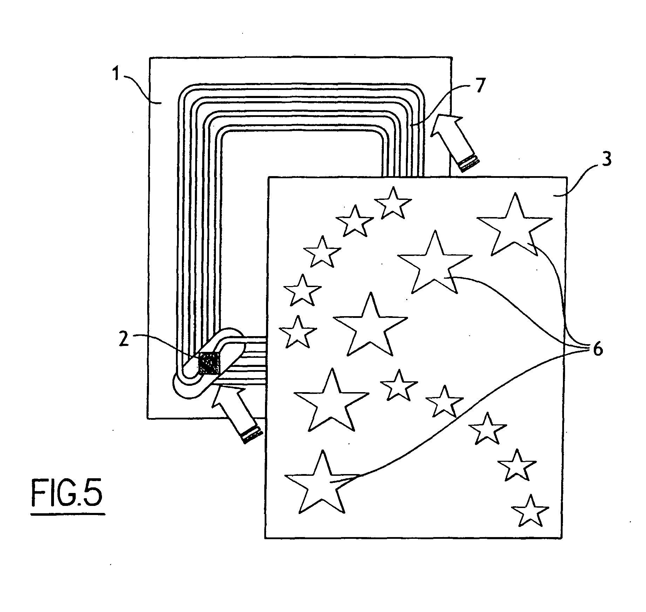

Avec cette technique, on peut de plus réaliser des différences de reliefs très importantes, et de ce fait réaliser des cavités au verso de la feuille de plus fortes profondeurs. Ceci est illustré à la figure 5 dans laquelle la référence 6 désigne les différents reliefs générés par cette technique.

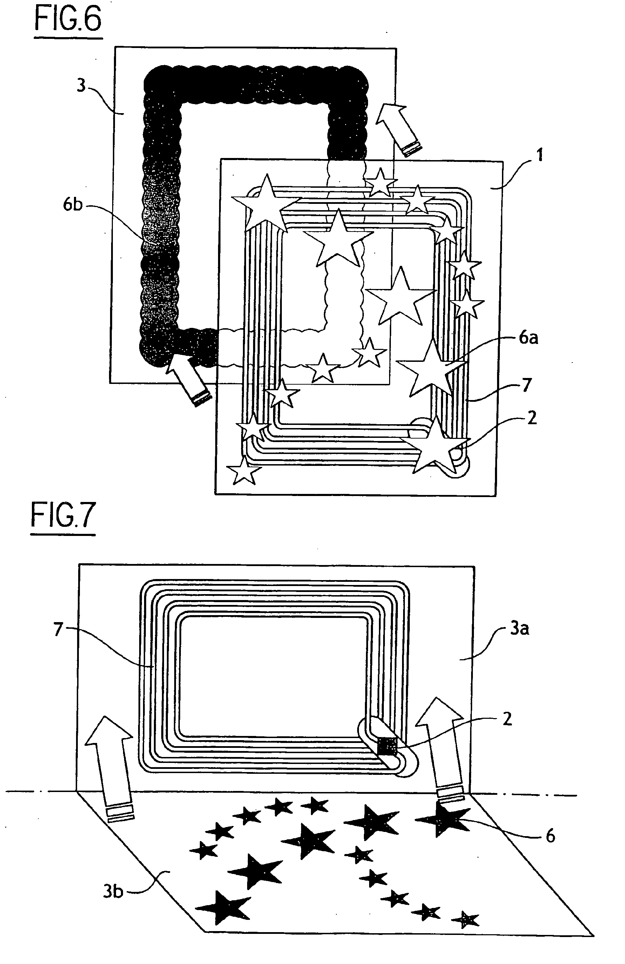

Dans un mode de réalisation, on combine la formation d'une cavité par gaufrage d'une feuille, avec la formation d'une seconde cavité sur l'autre feuille, par une impression en taille-douce avec ou sans encre. Ce gaufrage est réalisé notamment à l'aide de presses d'embossage qui comportent des parties mâle et femelle complémentaire. Le transpondeur 2 est alors positionné entre ces deux cavités positionnées en regard l'une de l'autre. Ceci est illustré à la figure 6.

Plus précisément, le transpondeur 2 est disposé sur son antenne 7, par exemple imprimée directement sur le verso de la feuille 1 (ou, dans un mode de réalisation non visible, sur le verso de la feuille 3). Le gaufrage au recto de la feuille 1 est exécuté par exemple avec des motifs répétitifs 6a en forme d'étoile. Une impression en taille-douce sous la forme de bandeaux consistant en un "cadre" 6b est exécuté sur le recto de la feuille 3. Lors de l'étape d'assemblage des supports 1 et 3, par exemple par contre-collage, le transpondeur 2 est dissimulé par les ensembles 6a et 6b.

Dans les exemples précédents, les deux feuilles du document sont deux éléments distincts. Ce procédé est particulièrement adapté à la réalisation de documents de type passeport, dans lequel on doit réaliser, après façonnage, un livret.

Dans un autre mode de réalisation de la présente invention, on peut réaliser les deux feuilles constitutives du document, à partir d'une seule et même feuille de départ. Cette dernière est alors pliée selon un axe médian pour composer le document final. Dans ce cas, l'antenne et le transpondeur sont déposés sur l'un des volets du document.

L'impression en taille-douce, avec ou sans encre, est réalisée soit sur le second volet du document, soit sur la totalité de celui-ci.

Après pliage, le transpondeur est masqué par ces éléments qui se retrouveront en vis-à-vis. On pourra retrouver toutes les combinaisons de masquage évoquées dans les exemples précédents.

Ce type de procédé est particulièrement adapté pour des produits type carte d'identité, carte grise, permis de conduire, etc... avec lesquels, après façonnage, on doit obtenir un document unitaire.

Plus précisément en référence à la figure 7, le transpondeur 2 est disposé sur l'antenne 7 qui est par exemple imprimée sur le verso de la première partie du volet 3a de la feuille. L'impression taille-douce est réalisée au recto du second volet 3b, par exemple avec des motifs répétitifs 6 en forme d'étoile.

Lors de l'étape de pliage, les deux faces verso des volets 3a et 3b se retrouvent en vis-à-vis, de telle manière que le transpondeur 2 se trouve dissimulé par un des motifs 6.

Comme montré plus haut, la présente invention répond de manière élégante à la problématique énoncée, par la mise en oeuvre de procédés traditionnellement utilisés pour valoriser et sécuriser les documents fiduciaires.

## Revendications

1. Procédé de fabrication d'un document de sécurité, tel qu'une carte d'identité, un permis de conduire, ou un passeport, qui comprend des caractéristiques imprimées invariables, ainsi que des caractéristiques imprimées variables, liées notamment à l'identité de son porteur, et qui est constitué d'au moins une première feuille (1, 3a) et une deuxième feuille (3, 3b) solidaire de la première, une puce (2) sans contact et son antenne associée étant emprisonnées entre ces deux feuilles, selon lequel, préalablement à la solidarisation des deux feuilles (1, 3a / 3, 3b), on soumet la face verso (30) d'au moins l'une d'entre elles à une opération générant sur cette face, au moins une cavité (4), tout en créant simultanément sur la face recto opposée un relief (5), l'une desdites cavités (4) présentant des dimensions suffisantes pour servir de logement à la totalité de ladite puce (2), lors de la solidarisation desdites feuilles, **caractérisé par le fait que** ladite opération consiste en une impression en taille-douce de ladite feuille avec ou sans encrage, de sorte que ledit relief (5) est revêtu ou non d'encre (6).

2. Procédé selon la revendication 1, dans lequel on soumet la face verso (10, 30) des deux feuilles (1, 3) à une opération générant sur cette face, au moins une cavité (4), tout en créant simultanément sur la face recto opposée (11, 31) un relief, **caractérisé par le fait que** ladite opération est de même nature ou de nature différente pour chaque feuille.

3. Procédé selon la revendication 1, dans lequel on soumet la face verso (30) d'une seule (3) des deux feuilles à une opération générant sur cette face, au moins une cavité (4), tout en créant simultanément sur la face recto (31) opposée un relief (5), **caractérisé par le fait que** ladite puce et son antenne associée sont portée par la face verso (10) de la deuxième feuille (1).

4. Procédé selon la revendication 1, dans lequel on soumet la face verso (30) d'une seule (3) des deux feuilles à une opération générant sur cette face, au moins une cavité (4), tout en créant simultanément sur la face recto (31) opposée un relief (5), **caractérisé par le fait que** ladite puce (2) et son antenne associée sont portée par la face verso (31) de cette feuille (3).

5. Procédé selon l'une des revendications précédentes, **caractérisé par le fait que** ladite antenne est préalablement imprimée sur la face verso (10, 30) d'une desdites feuilles (1, 3).

6. Procédé selon l'une des revendications précédentes, **caractérisé par le fait que** l'on génère une seule cavité (4), tout en créant simultanément sur la face recto opposée (31) de la feuille (3), un seul relief (5), ces cavité et relief présentant, dans des plans parallèles au plan général de la feuille, une surface beaucoup plus importante que celle de la puce (2).

7. Procédé selon l'une des revendications 1 à 5, **caractérisé par le fait que** l'on génère plusieurs cavités (4), tout en créant simultanément sur la face recto opposée (31) de la feuille (3), autant de reliefs (5), ces reliefs (5) présentant une forme identique ou différente, préférentiellement de surface différente.

8. Procédé selon l'une des revendications précédentes, **caractérisé par le fait que** l'on solidarise lesdites feuilles (1, 3 / 3a, 3b) par contre collage.

9. Procédé selon l'une des revendications précédentes, **caractérisé par le fait que** lesdites feuilles (3a, 3b) forment les deux volets d'une feuille de plus grande dimension, repliée sur elle -même.

10. Document de sécurité, qui comprend des caractéristiques imprimées invariables, ainsi que des caractéristiques imprimées variables, liées notamment à l'identité de son porteur, et qui est constitué d'au moins une première feuille (1, 3a) et une deuxième feuille (3, 3b) solidaire de la première, une puce (2) sans contact et son antenne associée étant emprisonnées entre ces deux feuilles (1, 3a / 3, 3b), la face verso (30) d'au moins l'une d'entre elles comportant au moins une cavité (4) et, sur la face recto opposée et en regard de ladite cavité, un relief (5) correspondant, l'une desdites cavités (4) présentant des dimensions suffisantes pour servir de logement à la totalité ladite puce (2) entre lesdites feuilles solidarisées, **caractérisé par le fait qu'**il consiste en un passeport ou en une carte d'identité et que ladite cavité (4) est obtenue par une impression en taille douce.

## Claims

1. Method for producing a security document, such as an identity card, a driving licence, or a passport, which comprises invariable printed features and variable printed features, the latter relating particularly to its bearer's identity, and which consists as a minimum of a first sheet (1, 3a) and a second sheet (3, 3b) fixed to the first sheet, a contactless chip (2) and its associated antenna being trapped between these two sheets, in which method, before the two sheets (1, 3a/3, 3b) are fixed together, the verso face (30) of at least one of the sheets is subjected to an operation which generates on this face at least one cavity (4), while simultaneously creating on the opposite or recto face a relief (5), one of said cavities (4) having dimensions sufficient to serve as a housing for the whole of said chip (2) when said sheets are fixed together, which method is **characterized in that** said operation consists in printing said sheet by intaglio with or without inking, so that said relief (5) is either coated or not coated with ink (6).

2. Method according to Claim 1, in which the verso face (10, 30) of both sheets (1, 3) is subjected to an operation that generates on this face at least one cavity (4) while simultaneously creating on the opposite or recto face (11, 31) a relief, which method is **characterized in that** said operation is of the same type or a different type for each sheet.

3. Method according to Claim 1, in which the verso face (30) of only one (3) of the two sheets is subjected to an operation that generates on this face at least one cavity (4), while simultaneously creating on the opposite or recto face (31) a relief (5), which method is **characterized in that** said chip and its associated antenna are carried by the verso face (10) of the second sheet (1).

4. Method according to Claim 1, in which the verso face (30) of only one (3) of the two sheets is subjected to an operation that generates on this face at least one cavity (4), while simultaneously creating on the opposite or recto face (31) a relief (5), which method is **characterized in that** said chip (2) and its associated antenna are carried by the verso face (30) of this sheet (3).

5. Method according to one of the preceding claims, **characterized in that** said antenna is pre-printed on the verso face (10, 30) of one of said sheets (1, 3).

6. Method according to one of the preceding claims, **characterized in that** a single cavity (4) is generated, while simultaneously a single relief (5) is created on the opposite or recto face (31) of the sheet (3), the cavity and relief having, in planes parallel to the general plane of the sheet, a much greater surface area than the surface area of the chip (2).

7. Method according to one of Claims 1 to 5, **characterized in that** a plurality of cavities (4) are generated, while they are simultaneously created on the opposite or recto face (31) of the sheet (3) an equal number of reliefs (5), these reliefs (5) being identical or different in shape, preferably of different surface areas.

8. Method according to one of the preceding claims, **characterized in that** said sheets (1, 3/3a, 3b) are fixed together by lamination.

9. Method according to one of the preceding claims, **characterized in that** said sheets (3a, 3b) form the two leaves of a larger sheet folded on itself.

10. Security document comprising invariable printed features and variable printed features, the latter relating particularly to its bearer's identity, and which consists as a minimum of a first sheet (1, 3a) and a second sheet (3, 3b) fixed to the first sheet, a contactless chip (2) and its associated antenna being trapped between these two sheets (1, 3a/3, 3b), the verso face (30) of at least one of these sheets comprising at least one cavity (4) and, on the opposite or recto face and facing said cavity, a corresponding relief (5), one of said cavities (4) having dimensions sufficient to serve as a housing for the whole of said chip (2) between said fixed sheets, **characterized in that** it is a passport or an identity card and **in that** said cavity (4) is made by intaglio printing.

## Patentansprüche

1. Verfahren zur Herstellung eines Sicherheitsdokuments, wie zum Beispiel eines Personalausweises, eines Führerscheins, oder eines Passes, der gedruckte unveränderliche Kennzeichen umfasst, sowie gedruckte veränderliche Kennzeichen, die insbesondere mit der Identität seines Trägers verbunden sind, und der aus wenigstens einem ersten Bogen (1, 3a) und einem zweiten Bogen (3, 3b) gebildet ist, der mit dem ersten verbunden ist, wobei ein kontaktloser Chip (2) und seine zugehörige Antenne zwischen diese beiden Bögen eingeschlossen sind, gemäß dem vor der Verbindung der beiden Bögen (1, 3a / 3, 3b) die Rückseite (30) des wenigstens einen von ihnen einer Operation unterzogen wird, die auf dieser Seite wenigstens einen Hohlraum (4) erzeugt, während gleichzeitig auf der gegenüberliegenden Vorderseite eine Erhöhung (5) geschaffen wird, wobei der eine der Hohlräume (4) ausreichende Abmessungen aufweist, um als Unterbringung des gesamten Chips (2) bei der Verbindung der Bögen zu dienen, **dadurch gekennzeichnet, dass** die Operation aus einem Tiefdruck des Bogens mit oder ohne Farbwerk besteht, damit die Erhebung (5) mit Tinte (6) beschichtet wird oder nicht.

2. Verfahren gemäß Anspruch 1, bei welchem die Rückseite (10, 30) der beiden Bögen (1, 3) einer Operation unterzogen wird, die auf dieser Seite wenigstens einen Hohlraum (4) erzeugt, während gleichzeitig auf der gegenüberliegenden Vorderseite (11, 31) eine Erhöhung gebildet wird, **dadurch gekennzeichnet, dass** für jeden Bogen die Operation von derselben Art oder von unterschiedlicher Art ist.

3. Verfahren gemäß Anspruch 1, bei welchem die Rückseite (30) eines einzigen (3) der beiden Bögen einer Operation unterzogen wird, die auf dieser Seite wenigstens einen Hohlraum (4) erzeugt, während auf der gegenüberliegenden Vorderseite (31) eine Erhöhung (5) erzeugt wird, **dadurch gekennzeichnet, dass** der Chip und seine zugehörige Antenne von der Rückseite (10) des zweiten Bogens (1) getragen werden.

4. Verfahren gemäß Anspruch 1, bei welchem die Rückseite (30) eines einzigen (3) der beiden Bögen einer Operation unterzogen wird, die auf dieser Seite wenigstens einen Hohlraum (4) erzeugt, während gleichzeitig auf der gegenüberliegenden Vorderseite (31) eine Erhöhung (5) erzeugt wird, **dadurch gekennzeichnet, dass** der Chip (2) und seine zugehörige Antenne von der Rückseite (31) dieses Bogens (3) getragen werden.

5. Verfahren gemäß einem der vorhergehenden Ansprüche, **dadurch gekennzeichnet, dass** die Antenne vorab auf die Rückseite (10, 30) eines der Bögen (1, 3) gedruckt wird.

6. Verfahren gemäß einem der vorhergehenden Ansprüche, **dadurch gekennzeichnet, dass** ein einziger Hohlraum (4) erzeugt wird, während gleichzeitig auf der gegenüberliegenden Vorderseite (31) des Bogens (3) eine einzige Erhöhung (5) geschaffen wird, wobei dieser Hohlraum und diese Erhöhung in Ebenen parallel zur allgemeinen Ebene des Bogens eine Fläche aufweisen, die viel weitgehender als die des Chips (2) ist.

7. Verfahren gemäß einem der Ansprüche 1 bis 5, **dadurch gekennzeichnet, dass** mehrere Hohlräume (4) erzeugt werden, während gleichzeitig auf der gegenüberliegenden Vorderseite (31) des Bogens (3) genauso viele Erhöhungen (5) geschaffen werden, wobei diese Erhöhungen (5) eine identische oder unterschiedliche Form aufweisen, vorzugsweise mit unterschiedlicher Oberfläche.

8. Verfahren gemäß einem der vorhergehenden Ansprüche, **dadurch gekennzeichnet, dass** die Bögen (1, 3/3a, 3b) durch Kaschierung verbunden werden.

9. Verfahren gemäß einem der vorhergehenden Ansprüche, **dadurch gekennzeichnet, dass** die Bögen (3a, 3b) die beiden Klappen eines Bogens mit größerer Abmessung bilden, der auf sich selbst gefaltet ist.

10. Sicherheitsdokument, das gedruckte unveränderliche Kennzeichen umfasst, sowie gedruckte veränderliche Kennzeichen, die insbesondere mit der Identität ihres Trägers verbunden sind, und das aus wenigstens einem ersten Bogen (1, 3a) und einem zweiten Bogen (3, 3b) gebildet ist, der mit dem ersten verbunden ist, wobei ein kontaktloser Chip (2) und seine zugehörige Antenne zwischen diesen beiden Bögen (1, 3a / 3, 3b) eingeschlossen sind, wobei die Rückseite (30) des wenigstens einen von ihnen wenigstens einen Hohlraum (4) umfasst, sowie auf der gegenüberliegenden Vorderseite gegenüber dem Hohlraum eine entsprechende Erhöhung (5), wobei der eine der Hohlräume (4) ausreichende Abmessungen aufweist, um als Unterbringung des gesamten Chips (2) zwischen den verbundenen Bögen zu dienen, **dadurch gekennzeichnet, dass** es aus einem Pass oder aus einem Personalausweis besteht und dass der Hohlraum (4) durch einen Tiefdruck erhalten wird.
